# EUROPEAN PATENT APPLICATION

(11) **EP 4 450 661 A1**
(43) Date of publication of application: **23.10.2024**
(21) Application number: 23737085.3
(22) Date of filing: 05.01.2023
(51) Int. Cl.: C22C 38/02

(54) **NON-ORIENTED ELECTRICAL STEEL PLATE WITH GOOD MAGNETIC PERFORMANCE AND MANUFACTURING METHOD THEREFOR**

(30) Priority: 07.01.2022 CN 202210015465
(71) Applicant: BAOSHAN IRON & STEEL CO., LTD., Shanghai 201900 (CN)
(72) Inventor: LI, Guobao, Shanghai 201900 (CN); ZHANG, Feng, Shanghai 201900 (CN); FANG, Xianshi, Shanghai 201900 (CN); WANG, Bo, Shanghai 201900 (CN); LYU, Xuejun, Shanghai 201900 (CN)
(74) Representative: Maiwald GmbH
(86) International application number: PCT/CN2023/070635
(87) International publication number: WO 2023/131223

(57) **Abstract**

Disclosed in the present invention is a non-oriented electrical steel plate with good magnetic performance. The non-oriented electrical steel plate contains Fe and inevitable impurities, and further contains the following chemical elements, in percentage by mass: 0<C≤0.0015%, Si: 0.2-1.8%, Mn: 0.2-0.4%, Al: 0.2-0.6%, V: 0.002-0.005%, and N<0.002%. In addition, further disclosed in the present invention is a manufacturing method for the non-oriented electrical steel plate with good magnetic performance. The manufacturing method comprises the steps of: (1) smelting and casting: (2) hot rolling, wherein a steel coil obtained after the hot rolling is not subjected to normalizing annealing or cover annealing, but directly enters the next step; (3) acid pickling; (4) cold rolling; and (5) continuous annealing, wherein the steel plate is rapidly heated to a target soaking temperature at a heating rate of 50-5000 °C/s after the cold rolling.

## Description

### TECHNICAL FIELD

The present invention relates to a steel plate and a manufacturing method therefor, in particular, to a non-oriented electrical steel plate and a manufacturing method therefor.

### BACKGROUND

In the prior art, non-oriented electrical steel plates are commonly used to make stators and rotors of iron cores for use in motors, generators, compressors, and high-speed motors, driving motors and other products.

However, in recent years, with the increasing demand for high efficiency, energy saving and consumption reduction in user market, the existing non-oriented electrical steel plates have gradually failed to meet the market's demand; therefore, in order to meet the new technical requirements of the market for non-oriented electrical steel plates, it is urgent to develop a non-oriented electrical steel plate with higher magnetic induction and lower iron loss.

In order to achieve the best electromagnetic performance possible for a non-oriented electrical steel plate, some researchers have carried out a lot of research and achieved certain research results, but the practical application results are not very satisfactory.

For example, China patent application publicationCN103014503A published on April 3, 2013, entitled "Acid-corrosion-resistant non-oriented silicon steel with high magnetic Induction and low iron loss without normalizing and production method therefor" points out that by adding 0.20%-0.45% Sn+Cu to steel, the texture of a finished strip steel can be improved due to grain boundary segregation, so that good magnetic induction performance can be obtained. However, Sn and Cu are precious metals, which will significantly increase the manufacturing cost of steel, and Cu tends to cause related quality defects on the surface of strip steel. Therefore, in a practical application process, the technical solution of the patent application has strict requirements for production process, and the resulting product has a relatively low cost performance.

For another example, Japanese Patent Laid-Open Publication No. 10-183227 and Japanese Patent Laid-Open Publication No. 2004-169141 point out that inclusions in steel can be removed and the cleanliness of the steel can be improved by strong deoxidation and desulfurisation of molten steel by means of adding an appropriate amount of rare earth and calcium alloy to the steel, so that the electromagnetic performance of finished strip steel can be improved efficiently and conveniently. In addition, the above-mentioned Japanese patent documents also point out that by reducing harmful elements C, S, O, N, Nb, V and Ti in steel, and at the same time combining a high tapping temperature, a high final rolling temperature and a high coiling temperature in a hot rolling process, a hot-rolled steel plate with coarse grains can be obtained, which is beneficial to the coarsening of inclusions, thus playing a good role in promoting the improvement of the magnetic performance of the finished strip steel. However, the disadvantage of such a technical solution is that the energy consumption of hot rolling is high, and the stability of finish rolling process is poor due to significant increase of preheating temperature and migration of phase transition point, and high coiling temperature easily leads to red scale defects.

In view of the above, the present inventor designs and intends to obtain a novel non-oriented electrical steel plate with good magnetic performance, which aims to improve the electromagnetic performance, reduce the iron loss and improve the magnetic induction of an electrical steel.

### SUMMARY

One of the objects of the present invention is to provide a non-oriented electrical steel plate with good magnetic performance, which aims to improve the electromagnetic performance, reduce the iron loss and improve the magnetic induction of a non-oriented electrical steel plate.

In order to achieve the above object, the present invention provides a non-oriented electrical steel plate with good magnetic performance, which contains Fe and inevitable impurities, and further contains the following chemical elements, in percentage by mass:
0<C≤0.0015%, Si: 0.2-1.8%, Mn: 0.2-0.4%, Al: 0.2-0.6%, V: 0.002-0.005%, and N<0.002%.

Preferably, the non-oriented electrical steel plate according to the present invention contains the following chemical elements, in percentage by mass:
0<C≤0.0015%, Si: 0.2-1.8%, Mn: 0.2-0.4%, Al: 0.2-0.6%, V: 0.002-0.005%, and N<0.002%; and the balance being Fe and inevitable impurities.

The chemical elements for the non-oriented electrical steel plate according to the present invention are designed based on the following principle.

C: in the non-oriented electrical steel plate according to the present invention, the content of C in steel should not be too high. When the content of C in the steel for the steel plate of the present invention is higher than 0.0015%, C will preferentially combine with Nb and Ti to form inclusions with fine dimensions, which will lead to increased steel loss. In view of this, in order to give full play to beneficial effects of C, in the non-oriented electrical steel plate according to the present invention, the mass percentage content of C is controlled to be 0<C≤0.0015%.

Si: in the present invention, Si is added to the non-oriented electrical steel plate with a medium to low content. When the content of Si is higher than 1.8%, it will not only increase the manufacturing cost of the steel plate, but also significantly deteriorate the magnetic induction of the steel; when the content of Si is lower than 0.2%, the effect of effectively reducing the iron loss cannot be achieved. In view of this, in the non-oriented electrical steel plate according to the present invention, the mass percentage content of Si is controlled to be between 0.2% and 1.8%.

Mn: in the non-oriented electrical steel plate according to the present invention, an appropriate amount of Mn is added with S to form MnS, which is beneficial to control the morphology and number of inclusions, and can effectively reduce the harm to the magnetic performance, so it is necessary to add 0.2% or more of Mn; on the other hand, when the content of added Mn is higher than 0.4%, the recrystallization texture will deteriorate and the magnetic induction of the steel plate will be reduced. In view of the above and considering the beneficial effects and the adverse effects of Mn, in the non-oriented electrical steel plate according to the present invention, the mass percentage content of Mn is 0.2-0.4%.

Al: in the non-oriented electrical steel plate according to the present invention, when the content of Al added in the steel for the steel plate according to the present invention is higher than 0.6%, the performance of the steel plate will be significantly deteriorated; on the other hand, when the content of Al added in the steel plate is lower than 0.2%, a good effect of reducing the iron loss cannot be achieved. In view of this, in the non-oriented electrical steel plate according to the present invention, the mass percentage content of Al is controlled to be between 0.2% and 0.6%.

V: in conventional techniques, V is usually regarded as a harmful element for a non-oriented electrical steel plate, and the lower the content of V is, the better. However, in the non-oriented electrical steel plate according to the present invention, V is used as an important beneficial element. Different from reducing the content of V as much as possible in conventional techniques so as to reduce the content of harmful inclusions as much as possible, in the present invention, an appropriate amount of V is intentionally added, in combination with adjustment of manufacturing process and controlling the types and numbers of the N-containing inclusions, harmless treatment of Nb, V and Ti is realized to the maximum extent. In this way, matching and combination of chemical components beneficial to obtaining good magnetic performance and reasonable preconditions for controlling the types of inclusions are realized.

In the technical solution according to the present invention, when the content of V in the steel is lower than 0.002%, good effects of fixing C and N cannot be achieved, and inclusions of V are various and small in size; on the other hand, when the content of V in the steel is too high, and exceeds 0.005%, the number of inclusions formed by V with C and N will increase greatly, which will strongly hinder grain growth and deteriorate the magnetic performance of the steel. Therefore, in order to exert the beneficial effects of V, in the non-oriented electrical steel plate according to the present invention, the mass percentage content of V is controlled to be between 0.002% and 0.005%.

N: in the non-oriented electrical steel plate according to the present invention, as a harmful impurity element, the content of N should not be too high. When the content of N in the steel exceeds 0.002%, the number of inclusions formed by N with Nb, V, Ti, Al, and other elements will increase greatly, which strongly hinders grain growth and deteriorates the magnetic performance of the steel. In view of this, in the non-oriented electrical steel plate according to the present invention, the mass percentage content of N is controlled to satisfy: N<0.002%.

Preferably, in the non-oriented electrical steel plate according to the present invention, among the inevitable impurities, Nb≤0.002%, and Ti≤0.002%.

In the above technical solution of the present invention, Nb and Ti are both inevitable impurity elements in the steel, and the content of the impurity elements in the steel should be controlled as low as possible if the technological conditions permit.

Nb: in the non-oriented electrical steel plate according to the present invention, when the content of Nb is higher than 0.002%, NbN inclusions in the steel will increase abnormally, thereby leading to a sharp increase in the iron loss of the finished steel plate. Therefore, in the present invention, the impurity element Nb needs to be strictly controlled to satisfy: Nb ≤ 0.002%.

Ti: in the non-oriented electrical steel plate according to the present invention, when the content of Ti is higher than 0.002%, TiN inclusions in the steel will increase abnormally, thereby leading to a sharp increase in the iron loss of the finished steel plate. Therefore, in the present invention, the impurity element Ti needs to be strictly controlled to satisfy: Ti≤0.002%.

Preferably, the non-oriented electrical steel plate according to the present invention contains N-containing inclusions as main inclusions, and the N-containing inclusions include individual VN and AlN and/or composite VN, AlN, NbN and TiN.

Relative to "composite", the term "individual" refers to a state in which different inclusions are not mutually doped.

Preferably, in the non-oriented electrical steel plate according to the present invention, the N-containing inclusions have a size of 200-500 nm.

Preferably, in the non-oriented electrical steel plate according to the present invention, a volume fraction ratio of VN to N-containing inclusions is ≥0.85.

In the present invention, the content of the beneficial element V is controlled to be between 0.002% and 0.005% in order to form VN inclusions with relatively large size as much as possible, instead of fine-sized NbN and TiN inclusions. In order to avoid formation of fine-sized NbN, TiN, C-containing inclusions of Nb, V, Ti and the like, in the present invention, the content of C is strictly limited to 0<C≤0.0015%, and in actual production process, the content of C can be more preferably controlled to 0<C≤0.0010% from the view of manufacturing difficulty. Under the condition of the above chemical elements and the condition that the content of Al in the steel is 0.2-0.6%, the N-containing inclusions become the main factor restricting the magnetic performance of the finished steel plate.

Therefore, in the present invention, it is necessary to preferably limit the volume fraction ratio of VN to N-containing inclusions in the steel to be ≥0.85 to reduce the occurrence of non-VN type inclusions. The main principle of adjustment here is to adjust the content of V in the steel, thereby adjusting the proportion of VN inclusions in all N-containing inclusions in the steel. In addition, due to the high content of Al in the steel, which is between 0.2% and 0.6%, a large number of AlN inclusions can be formed in the steel. After colliding, combining and floating, AlN inclusions with relatively small size can remain in the steel and combine with VN inclusions, thus increasing the size of composite inclusions and reducing the harm caused by them.

Thus, when the number of VN inclusions formed in the steel is too small, the effect of compounding with AlN inclusions cannot be achieved. In this case, the AlN inclusions are small in size and cannot be removed by floating and remain in the steel; when the number of VN inclusions is too large, in addition to compounding with AlN inclusions, individual AlN will remain in the steel, and the harm caused by the VN inclusions will increase with the increase of the number of the VN inclusions.

Preferably, in the non-oriented electrical steel plate according to the present invention, the iron loss P_{15/50} is ≤4.2 W/kg, and the magnetic induction B₅₀ is ≥1.73 T.

Accordingly, another object of the present invention is to provide a manufacturing method for the above-mentioned non-oriented electrical steel plate with good magnetic performance, which is simple and feasible. By this manufacturing method, a non-oriented electrical steel plate with good magnetic performance can be obtained, wherein the steel plate has an iron loss P_{15/50} of ≤4.2W/kg and a magnetic induction B₅₀ of ≥ 1.73T.

In order to achieve the above object, the present invention provides a manufacturing method for a non-oriented electrical steel plate with good magnetic performance, including the steps of:
(1) smelting and casting;
(2) hot rolling, wherein a steel coil obtained after the hot rolling is not subjected to normalizing annealing or cover annealing, but is directly introduced to the next step;
(3) acid pickling for obtaining an acid-pickled steel plate;
(4) cold rolling for obtaining a cold-rolled steel plate; and
(5) continuous annealing, wherein the cold-rolled steel plate is rapidly heated to a target soaking temperature at a heating rate of 50-5000 °C/s.

In the present invention, the present inventor optimizes the design of the chemical composition of the steel and defines a reasonable manufacturing process. A continuously casting slab obtained after smelting and casting does not require normalizing annealing or cover annealing after being hot rolled; the slab can be continuously annealed in an electromagnetic induction device with a rapid heating function after being directly subjected to acid pickling and cold rolling, so that the electromagnetic performance required by the design of the present invention can be obtained. In the present invention, there are no special requirements for the hot rolling, acid pickling and cold rolling, with the principle of not increasing the manufacturing cost and technical difficulty of the steel.

It should be noted that in conventional techniques, although there are some technical solutions that do not require normalizing annealing or cover annealing, the steels prepared by these technical solutions are mostly high-silicon steels, and the contents of Si in these steels are high; different from the conventional techniques described above, Si in the steel of the present invention is only 0.2-1.8%, which is medium to low silicon steel, and normalizing annealing or cover annealing is not required when a medium-low silicon steel is used.

In the process of steelmaking of the present invention, strict control is required when designing the chemical composition of the steel, and the content of V in the steel should be particularly controlled. After smelting and casting, a steel ingot can be obtained; after hot rolling, the steel ingot does not require normalizing annealing or cover annealing, and after acid pickling and rust removal treatment, the acid pickled steel can be cold rolled to a target cold rolling thickness in one time, and continuously annealed in an electromagnetic induction device with a rapid heating function, and annealing atmosphere can be controlled to be a mixed gas of H₂ and N₂.

In step (5) of the above manufacturing method according to the present invention, the electromagnetic induction device with a rapid heating function is not limited to longitudinal or transverse magnetism, but its heating capacity needs to meet the requirement of rapidly heating the cold-rolled steel plate to the target soaking temperature during the continuous annealing. The target soaking temperature can generally be 500-1100°C, and starting temperature for heating can be a temperature below the soaking temperature, such as room temperature. The heating rate of the cold-rolled steel plate in the present invention is controlled to be 50-5000 °C/s, which is much higher than the heating rate of a conventional continuous annealing equipment by 1-30 °C/s. However, in some embodiments, the heating rate can be controlled to be 80-550 °C/s according to the production and actual quality requirements of finished steel plates.

Compared with conventional annealing methods using gas and (or) electric heating, slow heating (generally lower than 30 °C/s), the present invention adopts an electromagnetic induction heating device with a rapid heating function for continuous annealing, so as to realize rapid heating of the cold-rolled steel plate to a prescribed target soaking temperature in a short time. The purpose of using rapid heating is to effectively suppress recovery of the cold-rolled steel plate during continuous annealing, so that residual deformation energy storage of the cold-rolled steel plate can be significantly increased before recrystallization, which can lead to accumulation and increase of driving force for nucleation and promote nucleation and migration of large angle grain boundaries. At the same time, preferred orientation of crystal nucleus is also reduced, and finally <111>//ND recrystallization texture component strength can be reduced. Therefore, the continuous annealing method can make the steel obtain higher magnetic induction and lower iron loss.

It should be noted that during rapid heating and continuous annealing of the cold-rolled steel plate, in order to further increase the driving force for nucleation and growth, improve and control final recrystallization effect, and ensure coarse grain structure and low proportion of harmful grain orientation after continuous annealing, it is also necessary to properly limit the heating rate of rapid heating annealing to be between 50 °C/s and 5000 °C/s. When the heating rate of rapid heating is too slow and the heating rate is lower than 50 °C/s, energy storage of cold rolling deformation is released too quickly, which is not conducive to subsequent favorable texture control; when the rapid heating rate is too fast, and the heating rate is higher than 5000 °C/s, the requirements on equipment capacity are too high, and the cost is expensive, which will lead to too long time of a cold-rolled strip staying in a high-temperature stage and poor grain structure uniformity.

Preferably, in the manufacturing method according to the present invention, in step (5), the target soaking temperature is 500-1100 °C.

Preferably, in the manufacturing method according to the present invention, in step (5), the cold-rolled steel plate is rapidly heated to the target soaking temperature at a heating rate of 80-550 °C/s.

Preferably, in the manufacturing method according to the present invention, in step (2), during the hot rolling, the time for the casting slab staying in a furnace is controlled to 120-360 min, the initial rolling temperature is controlled to 1000-1250 °C, the final rolling temperature is controlled to 650-1000 °C, and the coiling temperature is controlled to 550-950 °C.

Preferably, in the manufacturing method according to the present invention, in step (2), the target thickness of the hot-rolled steel plate is controlled to be 0.8-3.5 mm; in step (4), the acid pickled steel plate is cold-rolled to the target cold rolling thickness in one time.

Compared with conventional techniques, the non-oriented electrical steel plate with good magnetic performance and the manufacturing method therefor according to the present invention have the following advantages and beneficial effects: different from conventional techniques, in the process of steelmaking of the present invention, V is taken as a beneficial element, and the content of V is intentionally adjusted.

In the non-oriented electrical steel plate according to the present invention, the present inventor optimizes chemical element composition ratios, the continuously casting slab obtained after smelting and casting does not require normalizing annealing or cover annealing, can be rapidly heated after being directly acid-pickled and cold-rolled to ensure that the cold-rolled steel plate is rapidly heated to the target soaking temperature at a relatively high heating rate, so that the electromagnetic performance requirement designed in the present invention can be obtained.

The chemical element design idea of the present invention is completely different from conventional techniques, and the manufacturing method is simple and feasible; and the non-oriented electrical steel plate thus manufactured has the characteristics of high magnetic induction and low iron loss, and the iron loss P_{15/50} is ≤4.2W/kg, and the magnetic induction B₅₀ is ≥1.73T.

### BRIEF DESCRIPTION OF THE DRAWINGS

FIG. 1 schematically shows the relationship between the volume fraction ratio of vanadium nitride (VN) to N-containing inclusions in the steel and the iron loss P_{15/50} of the finished steel plate in the non-oriented electrical steel plate according to the present invention.
FIG. 2 schematically shows the relationship between the heating rate of rapid heating and the magnetic induction B₅₀ of the finished steel plate in the non-oriented electrical steel plate according to the present invention.
FIG. 3 is a photograph of the microstructure of the finished non-oriented electrical steel plate of Example 3.
FIG. 4 is a photograph of the microstructure of the comparative steel of Comparative Example 2.

### DETAILED DESCRIPTION

The non-oriented electrical steel plate with good magnetic performance and the manufacturing method therefor according to the present invention will be further explained and illustrated with reference to the accompanying drawings and the specific examples. However, the explanations and illustrations should not be construed as constituting undue limitations on the technical solutions of the present invention.

### Examples 1-6 and Comparative Examples 1-3

The mass percentages of the chemical elements of the non-oriented electrical steel plates of Examples 1-6 and the comparative steel plates of Comparative Examples 1-3 are shown in Table 1.

**Table 1 (wt%, the balance being Fe and other inevitable impurities other than Nb and Ti)**

| Serial number | Chemical element | | | | | | | |
|---|---|---|---|---|---|---|---|---|
| | C | Si | Mn | Al | V | N | Nb | Ti |
| Example 1 | 0.0008 | 0.82 | 0.21 | 0.58 | 0.0048 | 0.0018 | 0.0007 | 0.0011 |
| Example 2 | 0.0014 | 1.32 | 0.38 | 0.21 | 0.0041 | 0.0009 | 0.0011 | 0.0008 |
| Example 3 | 0.0007 | 1.78 | 0.31 | 0.22 | 0.0050 | 0.0008 | 0.0004 | 0.0019 |
| Example 4 | 0.0006 | 0.27 | 0.27 | 0.60 | 0.0031 | 0.0011 | 0.0019 | 0.0007 |
| Example 5 | 0.0011 | 0.95 | 0.38 | 0.39 | 0.0022 | 0.0006 | 0.0012 | 0.0010 |
| Example 6 | 0.0010 | 1.60 | 0.23 | 0.25 | 0.0036 | 0.0017 | 0.0008 | 0.0002 |
| Comparative Example 1 | **0.0023** | 0.74 | 0.25 | 0.39 | **0.0005** | 0.0008 | **0.0024** | 0.0008 |
| Comparative Example 2 | **0.0017** | 1.35 | **0.12** | **0.8** | 0.0045 | **0.0022** | 0.0004 | **0.0022** |
| Comparative Example 3 | 0.0009 | 1.75 | **0.45** | 0.32 | 0.0047 | **0.0031** | 0.0012 | 0.0012 |

The non-oriented electrical steel plates of Examples 1-6 and the comparative steel plates of Comparative Examples 1-3 were all prepared by the following steps:
(1) performing smelting and casting steel materials with the chemical compositions shown in Table 1, wherein in the process of steelmaking, decarburization is prioritized to achieve the designed target, then deoxidation and alloying is performed, and the content of V is adjusted to the target range according to the contents of C, N, Nb and Ti in the steel material to obtain molten steel satisfying the chemical composition design requirement, and then the molten steel is casted into a steel ingot having a specified size.
(2) hot rolling, wherein during the hot rolling, the time of the slab obtained by casting the ingot is controlled to 120-360 min, the initial rolling temperature is controlled to 1000-1250 °C, the final rolling is controlled to 650-1000 °C, the coiling temperature is controlled to 550-950 °C, and the hot rolling is performing in 2-8 passes, and the target thickness of the hot-rolled steel plate is controlled to 0.8-3.5 mm, and wherein the steel coil obtained after the hot rolling is not subjected to normalizing annealing or cover annealing, but is directly introduced to the next step.
(3) performing acid pickling to obtain an acid-pickled steel plate.
(4) cold rolling of the acid-pickled steel plate, wherein the acid-pickled steel plate is subjected to cold rolling to a target cold rolling thickness of 0.50 mm in one time.
(5) continuous annealing, wherein the cold rolled steel plate is rapidly heated from room temperature to a target soaking temperature of 500-1100 °C at a heating rate of 50-5000 °C/s by a continuous annealing equipment with an electromagnetic induction rapid heating device, and is soaked for a period of time, for example, 10-120 s; and wherein the heating rate can be more preferably controlled to be between 80 °C/s and 550 °C/s; during the annealing, the annealing atmosphere can be controlled to be a mixed gas of H₂ and N₂.

It should be noted that in the present invention, the chemical composition and related process parameters in Examples 1-6 all meet the control requirements of the design specification of the present invention. However, in Comparative Examples 1-3, at least one chemical composition or process parameter does not meet the design requirements of the present invention.

The specific process parameters of the non-oriented electrical steel plates of Examples 1-6 and the comparative steel plates of Comparative Examples 1-3 in the above manufacturing process are shown in Table 2.

**Table 2**

| Number | Step (2) | | | | | | Step (5) | | | |
|---|---|---|---|---|---|---|---|---|---|---|
| | Time of slab staying in Furnace (min) | Initial rolling temperature (°C) | Final rolling temperature (°C) | Coiling temperature (°C) | Rolling pass (number of times) | Target thickness of hot-rolled steel plate (mm) | Heating rate (°C/s) | Target soaking temperature (°C) | Soaking and holding time (s) | Annealing atmosphere |
| Example 1 | 360 | 1050 | 880 | 570 | 3 | 2.6 | 550 | 900 | 60 | 35% H₂ + 65% N₂ |
| Example 2 | 120 | 1150 | 900 | 650 | 5 | 2.2 | 400 | 950 | 20 | 35% H₂ + 65% N₂ |
| Example 3 | 270 | 1200 | 800 | 550 | 2 | 3.5 | 5000 | 1000 | 10 | 35% H₂ + 65% N₂ |
| Example 4 | 180 | 1100 | 950 | 680 | 4 | 1.8 | 80 | 500 | 120 | 35% H₂ + 65% N₂ |
| Example 5 | 300 | 1250 | 1000 | 950 | 3 | 1.0 | 200 | 1100 | 30 | 35% H₂ + 65% N₂ |
| Example 6 | 270 | 1000 | 650 | 620 | 8 | 2.0 | 800 | 1000 | 80 | 35% H₂ + 65% N₂ |
| Comparative Example 1 | **600** | 1250 | 900 | 550 | 4 | **0.50** | **15** | 900 | 120 | 35% H₂ + 65% N₂ |
| Comparative Example 2 | 120 | 1120 | 850 | 700 | 2 | **0.50** | 400 | 1000 | 80 | 35% H₂ + 65% N₂ |
| Comparative Example 3 | 360 | 1200 | 950 | 650 | 4 | **0.50** | **45** | 900 | 30 | 35% H₂ + 65% N₂ |

The finished products of the non-oriented electrical steel plates of Examples 1-6 and the comparative steel plates of Comparative Examples 1-3 were sampled, respectively, and observed and analyzed. It was found that there are inclusions in the steels of the examples and the steels of comparative examples, and the main inclusions are N-containing inclusions. Through further analysis and testing, the average size and the specific composition of the N-containing inclusions in the steel plates of the examples and the steel plates of the comparative examples were obtained, and the relevant observation and analysis results are listed in the following Table 3.

**Table 3**

| Serial number | Type of N-containing inclusions | Average size of N-containing inclusions | Volume fraction ratio of VN to N-containing inclusions |
|---|---|---|---|
| Example 1 | Individual VN, VN + AIN | 477 nm | 0.88 |
| Example 2 | Individual VN, VN + TiN | 408 nm | 0.92 |
| Example 3 | Individual VN, VN + NbN | 296 nm | 0.95 |
| Example 4 | Individual VN, VN + AIN | 402 nm | 0.90 |
| Example 5 | Individual VN, VN + TiN | 272 nm | 0.93 |
| Example 6 | Individual VN, VN + NbN | 385 nm | 0.86 |
| Comparative Example 1 | Individual AIN, NbN + AIN | **85 nm** | **0.07** |
| Comparative Example 2 | Individual TiN, TiN + AlN | **39 nm** | **0.38** |
| Comparative Example 3 | Individual AIN, TiN + AIN | **147 nm** | **0.21** |

After the observation and analysis of the above inclusions are completed, the non-oriented electrical steel plates of Examples 1-6 and comparative steel plates of Comparative Examples 1-3 were sampled again, and the magnetic induction B₅₀ and iron loss P_{15/50} of the steel plates were tested, and the test results are listed in the following Table 4.

Relevant performance testing procedures are as follows.

Magnetic induction B₅₀ test: according to the national standard GB/T 3655-2008, an iron loss performance test was performed by an Epstein frame method. The test temperature was a constant temperature of 20 °C and the sample size was 30 mm×300 mm, and the target mass was 0.5 kg. The magnetic induction B₅₀ of the steel plates of the examples and comparative examples were obtained through this test.

Iron loss P_{15/50} test: according to the national standard GB/T 3655-2008, an iron loss performance test was performed by an Epstein frame method. Test temperature was a constant temperature of 20 °C and the sample size was 30 mm×300 mm, and the target mass was 0.5 kg. The iron loss P_{15/50} of the examples and comparative examples were obtained through this test. The test results of the magnetic induction B₅₀ and the iron loss P_{15/50} of the non-oriented electrical steel plates of Examples 1-6 and comparative steel plates of Comparative Examples 1-3 are shown in Table 4.

**Table 4**

| Serial number | Magnetic induction B₅₀ (T) | Iron loss P_{15/50} (W/kg) |
|---|---|---|
| Example 1 | 1.75 | 4.0 |
| Example 2 | 1.74 | 3.7 |
| Example 3 | 1.74 | 3.6 |
| Example 4 | 1.77 | 4.0 |
| Example 5 | 1.74 | 3.2 |
| Example 6 | 1.80 | 4.2 |
| Comparative Example 1 | 1.71 | 5.3 |
| Comparative Example 2 | 1.72 | 4.8 |
| Comparative Example 3 | 1.69 | 3.4 |

As shown in Table 4 above, in the present invention, the non-oriented electrical steel plates of Examples 1-6 have a magnetic induction B₅₀ within the range of 1.74-1.80 T, and an iron loss P_{15/50} within the range of 3.2-4.2 W/kg, which are all obviously superior to those of the comparative steel plates of Comparative Examples 1-3. Since Comparative Examples 1-3 do not meet the conditions specified in the technical solution of the present invention, the technical effects produced thereby are inferior to those of the present invention.

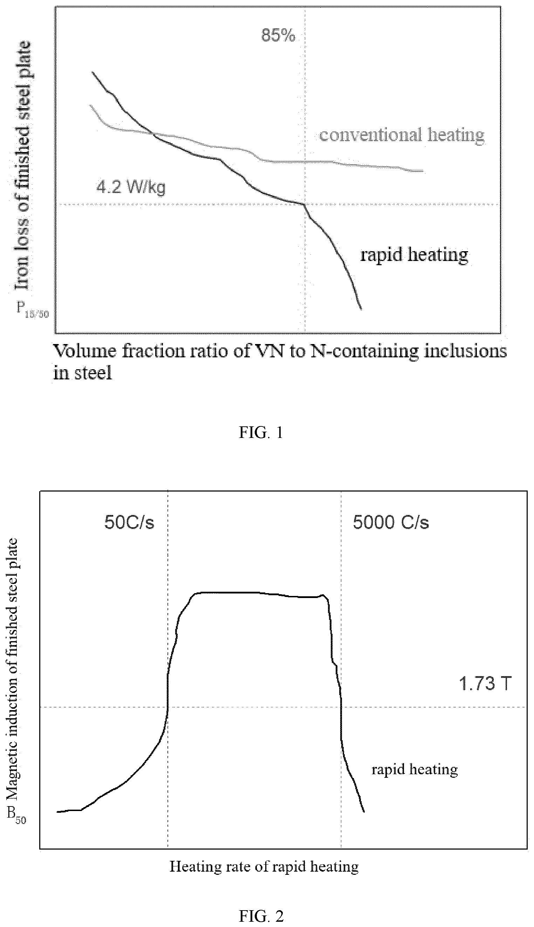

FIG. 1 schematically shows the relationship between the volume fraction ratio of VN to N-containing inclusions in steel as well as the iron loss P_{15/50} of the finished steel plate in the non-oriented electrical steel plate according to the present invention.

As shown in FIG. 1, as the volume fraction ratio of VN to N-containing inclusions in steel increases, the iron loss P_{15/50} of the finished steel plate decreases both during conventional heating and rapid heating, however, the iron loss P_{15/50} of the finished steel plate which has been rapid heated decreases significantly faster, and when the volume fraction ratio of VN to N-containing inclusions in the steel reaches 85% or above, the iron loss P_{15/50} of the finished steel plate which has been rapidly heated can be lower than 4.2 W/kg, meeting the design requirements of the present invention.

FIG. 2 schematically shows the relationship between the heating rate of rapid heating and the magnetic induction B₅₀ of the finished steel plate in the non-oriented electrical steel plate according to the present invention.

As shown in FIG. 2, with the increase of the heating rate of rapid heating in the non-oriented electrical steel plate, the magnetic induction of the finished non-oriented electrical steel plate gradually increases, and remains stable within the range of 50-5000 °C/s, meeting the control requirement of the present invention that the designed lower limit is 1.73T, and after exceeding 5000 °C/s, the magnetic induction of the finished non-oriented electrical steel plate rapidly deteriorates, lower than the control lower limit of 1.73T, not meeting the control requirements on magnetic induction designed in the present invention.

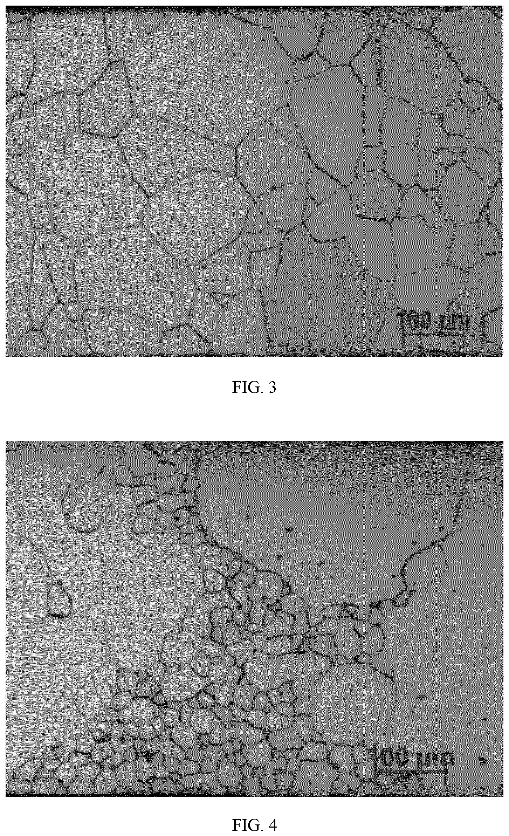

FIG. 3 is a photograph of the microstructure of the finished non-oriented electrical steel plate of Example 3.

As shown in FIG. 3, in the Embodiment of Example 3, the microstructure of the non-oriented electrical steel plate has been completely recrystallized, and the recrystallized grains are all relatively uniform equiaxed grains with coarse and developed grain sizes.

FIG. 4 is a photograph of the microstructure of the comparative steel of Comparative Example 2.

As shown in FIG. 4, in the embodiment of Comparative Example 2, the microstructure of the comparative steel has been completely recrystallized, but the proportion of equiaxed grains in the recrystallized grains is low, the size is fine, and the grain size distribution is relatively dispersed. Grains with larger grain size are abnormally grown "island grains".

It should be noted that the combination of various features of the present invention is not limited to those described in the claims or the embodiments, and all features of the present invention can be freely combined or combined in any way unless contradicted by each other.

It should also be noted that the examples illustrated above are only specific embodiments of the present invention. It is obvious that the present invention is not limited to the above examples, and similar variations or modifications will be obvious for those skilled in the art to do or easily replace based on the disclosure of the present invention, all of which falling within the scope of the claims.

## Claims

1. A non-oriented electrical steel plate, wherein the non-oriented electrical steel plate contains Fe and inevitable impurities, and further contains the following chemical elements, in percentage by mass:
0<C≤0.0015%, Si: 0.2-1.8%, Mn: 0.2-0.4%, Al: 0.2-0.6%, V: 0.002-0.005%, and N<0.002%.

2. The non-oriented electrical steel plate according to claim 1, wherein the non-oriented electrical steel plate contains the following chemical elements, in percentage by mass:
0<C≤0.0015%, Si: 0.2-1.8%, Mn: 0.2-0.4%, Al: 0.2-0.6%, V: 0.002-0.005%, and N<0.002%; and the balance being Fe and inevitable impurities.

3. The non-oriented electrical steel plate according to claim 1 or 2, wherein the inevitable impurities satisfy Nb< 0.002% and Ti< 0.002%.

4. The non-oriented electrical steel plate according to claim 1 or 2, wherein the non-oriented electrical steel plate contains N-containing inclusions as main inclusions, and the N-containing inclusions comprise individual VN, AlN and/or composite VN, AlN, NbN and TiN.

5. The non-oriented electrical steel plate according to claim 4, wherein the N-containing inclusions have a size of 200-500 nm.

6. The non-oriented electrical steel plate according to claim 4, wherein the non-oriented electrical steel plate has a volume fraction ratio of VN to N-containing inclusions of ≥ 0.85.

7. The non-oriented electrical steel plate according to claim 1 or 2, wherein the non-oriented electrical steel plate has an iron loss P_{15/50} of ≤ 4.2W/kg and a magnetic induction B₅₀ of ≥ 1.73T.

8. A manufacturing method for the non-oriented electrical steel plate according to any one of claims 1 to 7, comprising the following steps:
(1) smelting and casting;
(2) hot rolling, wherein a steel coil obtained after the hot rolling is directly introduced to the next step without being subjected to normalizing annealing or cover annealing, but;
(3) acid pickling to obtain an acid-pickled steel plate;
(4) cold rolling the acid-pickled steel plate to obtain a cold-rolled steel plate; and
(5) continuous annealing, wherein the cold-rolled steel plate is heated to a target soaking temperature at a heating rate of 50-5000 °C/s.

9. The manufacturing method according to claim 8, wherein step (5) satisfies at least one of the following conditions:
the target soaking temperature is 500-1100 °C;
the cold-rolled steel plate is heated to the target soaking temperature at a heating rate of 80-550 °C/s.

10. The manufacturing method according to claim 8, wherein step (2) satisfies at least one of the following conditions:
during hot rolling, a time of a casting slab in a furnace is controlled to 120-360 min, an initial rolling temperature is controlled to 1000-1250 °C, a final rolling temperature is controlled to 650-1000 °C, and a coiling temperature is controlled to 550-950 °C;
the hot-rolled steel plate is controlled to have a target thickness of 0.8-3.5 mm; and/or
in step (4), the acid-pickled steel plate is cold rolled to a target cold rolling thickness in one time.

## Amended claims

### Amended claims under Art. 19.1 PCT

1. A non-oriented electrical steel plate, wherein the non-oriented electrical steel plate contains Fe and inevitable impurities, and further contains the following chemical elements, in percentage by mass:
0<C <, 0.001%, Si: 0.2-1.8%, Mn: 0.2-0.4%, Al: 0.2-0.6%, V: 0.0031-0.005%, and N<0.002%.

2. The non-oriented electrical steel plate according to claim 1, wherein the non-oriented electrical steel plate contains the following chemical elements, in percentage by mass:
0<C <, 0.001%, Si: 0.2-1.8%, Mn: 0.2-0.4%, Al: 0.2-0.6%, V: 0.0031-0.005%, and N<0.002%; and the balance being Fe and inevitable impurities.

3. The non-oriented electrical steel plate according to claim 1 or 2, wherein the inevitable impurities satisfy Nb< 0.002% and Ti< 0.002%.

4. The non-oriented electrical steel plate according to claim 1 or 2, wherein the non-oriented electrical steel plate contains N-containing inclusions as main inclusions, and the N-containing inclusions comprise individual VN, AlN and/or composite VN, AlN, NbN and TiN.

5. The non-oriented electrical steel plate according to claim 4, wherein the N-containing inclusions have a size of 200-500 nm.

6. The non-oriented electrical steel plate according to claim 4, wherein the non-oriented electrical steel plate has a volume fraction ratio of VN to N-containing inclusions of ≥ 0.85.

7. The non-oriented electrical steel plate according to claim 1 or 2, wherein the non-oriented electrical steel plate has an iron loss P_{15/50} of ≤ 4.2W/kg and a magnetic induction B₅₀ of ≥ 1.73T.

8. A manufacturing method for the non-oriented electrical steel plate according to any one of claims 1 to 7, comprising the following steps:
(1) smelting and casting;
(2) hot rolling, wherein a steel coil obtained after the hot rolling is directly introduced to the next step without being subjected to normalizing annealing or cover annealing, but;
(3) acid pickling to obtain an acid-pickled steel plate;
(4) cold rolling the acid-pickled steel plate to obtain a cold-rolled steel plate; and
(5) continuous annealing, wherein the cold-rolled steel plate is heated to a target soaking temperature at a heating rate of 50-5000 °C/s.

9. The manufacturing method according to claim 8, wherein step (5) satisfies at least one of the following conditions:
the target soaking temperature is 500-1100 °C;
the cold-rolled steel plate is heated to the target soaking temperature at a heating rate of 80-550 °C/s.

10. The manufacturing method according to claim 8, wherein step (2) satisfies at least one of the following conditions:
during hot rolling, a time of a casting slab in a furnace is controlled to 120-360 min, an initial rolling temperature is controlled to 1000-1250 °C, a final rolling temperature is controlled to 650-1000 °C, and a coiling temperature is controlled to 550-950 °C;
the hot-rolled steel plate is controlled to have a target thickness of 0.8-3.5 mm; and/or
in step (4), the acid-pickled steel plate is cold rolled to a target cold rolling thickness in one time.
